# EUROPEAN PATENT APPLICATION

(11) **EP 4 760 054 A1**
(43) Date of publication of application: **17.06.2026**
(21) Application number: 25214508.1
(22) Date of filing: 10.11.2025
(51) Int. Cl.: F01D 5/14, F01D 11/08, F04D 29/52, F04D 29/68

(54) **FLUID FLOW MACHINE COMPRISING A CASING STRUCTURE**

(30) Priority: 10.12.2024 GB 202418073
(71) Applicant: Rolls-Royce plc, London N1 9FX (GB)
(72) Inventor: Wojewodka, Michael M, Derby, DE24 8BJ (GB); Everington, Daniel P T, Derby, DE24 8BJ (GB); Davies, Hannah C, Derby, DE24 8BJ (GB)
(74) Representative: Rolls-Royce plc

(57) **Abstract**

There is provided a fluid flow machine (10) comprising a casing structure (24) extending around an axial direction (41) of the fluid flow machine (10) and a turbomachine blade (311-315) disposed within the casing structure (24) The casing structure (24) includes an axially extending slot (331-335) having an axial extent (32) at least partially overlapping with an axial extent (31) of a tip (321-325) of the turbomachine blade (311-315), wherein the slot (331-335) has an angular extent (29) of no more than 36 degrees. The casing structure (24) includes a circumferentially extending groove (341, 342) having an angular extent (28) of at least 72 degrees. The groove (341, 342) is axially offset from the slot (331-335).

## Description

### CROSS REFERENCE TO RELATED APPLICATIONS

This represents the first application directed towards the subject-matter.

### FIELD

This disclosure relates to a fluid flow machine (e.g., a gas turbine engine) comprising a casing structure and a turbomachine blade. This disclosure further relates to a vehicle (e.g., an aircraft) comprising such a fluid flow machine.

### BACKGROUND

Performance of a fluid flow machine such as a gas turbine engine may be significantly impacted by boundary layer effects in a turbomachine blade tip area in proximity to an adjacent casing/wall. On turbomachine blade rows with running gaps, this may lead to undesirable flow phenomena and occurrence of instability of the fluid flow machine at some operating points.

The present invention has been devised with the foregoing in mind.

### SUMMARY

According to a first aspect there is provided a fluid flow machine comprising a casing structure extending around an axial direction of the fluid flow machine and a turbomachine blade disposed within the casing structure, wherein the casing structure includes an axially extending slot and a circumferentially extending groove.

In an embodiment, the axially extending slot and the circumferentially extending groove are adjacent to a tip of the turbomachine blade.

In an embodiment, the slot (e.g., a mouth of the slot) has an axial extent at least partially overlapping with an axial extent of the tip of the turbomachine blade.

In an embodiment, the slot has an angular extent of no more than 36 degrees. In an embodiment, the slot has an angular extent of no more than 18 degrees. In an embodiment, the slot has an angular extent of no more than 9 degrees.

In an embodiment, the casing structure includes a circumferentially extending groove having an angular extent of at least 72 degrees.

In an embodiment, the groove is axially offset from the slot.

In an embodiment, the slot is configured to promote recirculation of gas flow therein along the axial direction.

In an embodiment, the groove is configured to promote circulation of gas flow along an angular direction of the fluid flow machine.

In an embodiment, the slot is axially upstream of the groove.

In an embodiment, the angular extent of the groove is at least 180 degrees.

In an embodiment, the angular extent of the groove is equal to 360 degrees.

In an embodiment, the groove (e.g., a mouth of the groove) has an axial extent at least partially overlapping with the axial extent of the tip of the turbomachine blade.

In an embodiment, at least a portion of the slot is axially upstream of the tip of the turbomachine blade.

In an embodiment, the axial extent of the groove (e.g., the mouth of the groove) is completely overlapped by the axial extent of the tip of the turbomachine blade.

In an embodiment, at least a portion of a mouth of the slot is axially upstream of the turbomachine blade.

In an embodiment, a shape of an internal surface of the slot in a plane defined by the axial direction and a radial direction of the fluid flow machine is curvilinear and concave.

In an embodiment, a radial location of a maximum axial extent of the slot is radially offset from a mouth of the slot.

In an embodiment, a rearmost point of the internal surface is located at the mouth of the slot. In an embodiment, a foremost point of the internal surface is offset from the mouth of the slot along the radial direction.

In an embodiment, the casing structure comprises a plurality of circumferentially extending grooves.

In an embodiment, each groove (e.g., a mouth of each groove) has an axial extent at least partially overlapping with the axial extent of the tip of the turbomachine blade.

In an embodiment, each of the grooves are axially offset from one another.

In an embodiment, each groove has any of (e.g., any combination or all of) the features described with respect to the groove above.

In an embodiment, the casing structure comprises a plurality of axially extending slots.

In an embodiment, each slot (e.g., a mouth of each slot) has an axial extent at least partially overlapping with the axial extent of the tip of the turbomachine blade.

In an embodiment, the slots are angularly offset from one another.

In an embodiment, each slot has any of (e.g., any combination or all of) the features described with respect to the slot above.

In an embodiment, the turbomachine blade is part of a compressor stage, a turbine stage, a blower or a fan of the fluid flow machine.

In an embodiment, the fluid flow machine is a gas turbine engine.

According to a second aspect there is provided a vehicle comprising a fluid flow machine in accordance with the first aspect.

In an embodiment, the vehicle is an aircraft.

### BRIEF DESCRIPTION OF THE DRAWINGS

Embodiments will now be described by way of example only with reference to the accompanying drawings in which:
FIG. 1 is a simplified view of an aircraft comprising a gas turbine engine;
FIG. 2 is a sectional view of an example gas turbine engine;
FIG. 3 is detail section view of the gas turbine engine of FIG. 2;
FIG. 4 is a tangential section view of the gas turbine engine of FIG. 2;
FIG. 5 is a further tangential section view of the gas turbine engine of FIG. 2; and
FIG. 6 is a radial section view of the gas turbine engine of FIG. 2.

### DETAILED DESCRIPTION

### Aircraft

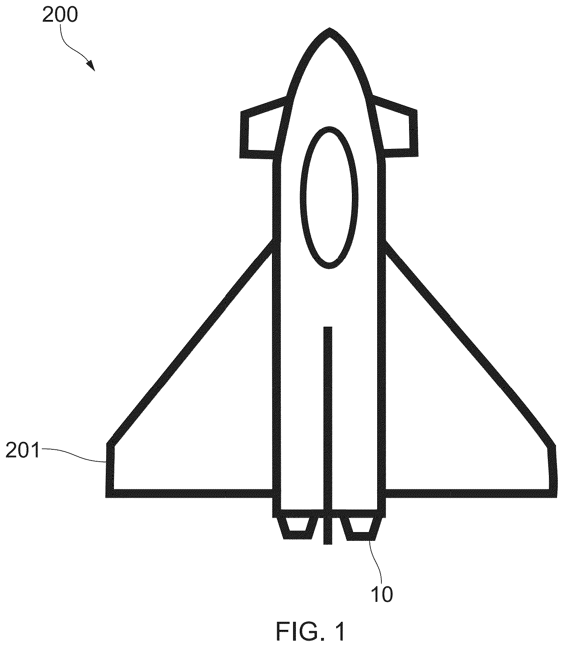

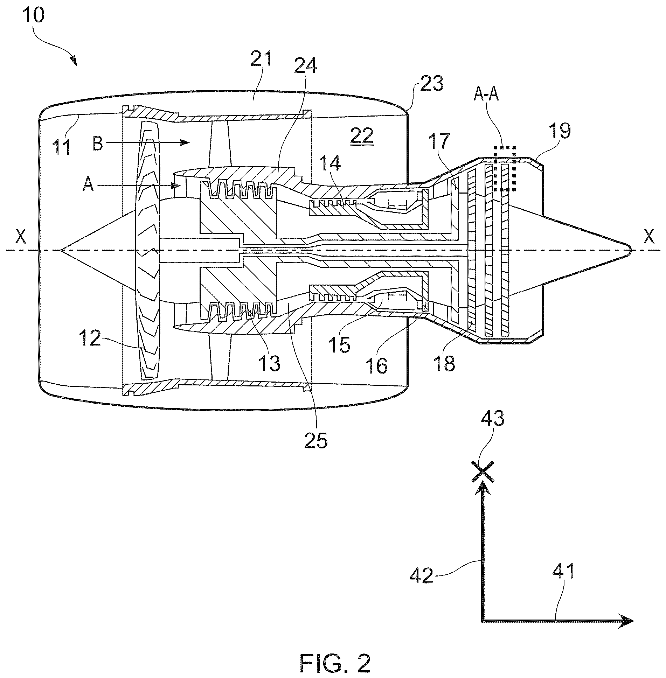

FIG. 1 shows a simplified and schematic view of an aircraft 200 comprising an airframe 201 and a gas turbine engine 10. The gas turbine engine 10 may be in accordance with the gas turbine engine 10 described below with reference to FIGs. 2 to 6.

### Gas turbine engine

FIG. 2 shows an example ducted fan gas turbine engine 10 having a principal and rotational axis X-X. The gas turbine engine 10 is suitable for use with the aircraft 200 described above with FIG. 1. The engine comprises, in axial flow series, an air intake 11, a propulsive fan 12, an intermediate-pressure compressor 13, a high-pressure compressor 14, a combustor 15, a high-pressure turbine 16, an intermediate pressure turbine 17, a low-pressure turbine 18 and a core engine exhaust outlet 19. A nacelle 21 generally surrounds the gas turbine engine 10 and defines the intake 11, a bypass duct 22 and a bypass exhaust outlet 23.

During operation, air entering the intake 11 is accelerated by the fan 12 to produce two gas flows: a first gas flow A into the intermediate pressure compressor 13 and a second gas flow B which passes through the bypass duct 22 to provide propulsive thrust. The intermediate-pressure compressor 13 compresses the gas flow A directed into it before delivering that air to the high-pressure compressor 14 where further compression takes place.

The compressed air exhausted from the high-pressure compressor 14 is directed into the combustor 15 where it is mixed with fuel and the mixture combusted. The resultant hot combustion products then expand through, and thereby drive the high, intermediate and low-pressure turbines 16, 17, 18 before being exhausted through the core engine exhaust outlet 19 to provide additional propulsive thrust. The high, intermediate and low-pressure turbines 16, 17, 18 respectively drive the high and intermediate pressure compressors 13, 14 and the fan 12 by suitable interconnecting shafts.

A casing structure 24 surrounds the compressors 13, 14, the combustor 15 and the turbines 16, 17, 18 to separate the bypass duct 22 from a core duct 25. The casing structure 24 therefore extends around an axial direction 41 of the gas turbine engine 10. The casing structure 24 may also be referred to as a support duct.

As will be appreciated by those skilled in the art, the axial direction 41 corresponds (e.g., is parallel to) to the principal rotational axis X-X. An angular direction 43 of the gas turbine engine 10 corresponds to a direction of rotation of the turbines 16, 17, 18 and the compressors 13, 14 (and the interconnecting shafts therebetween) around the principal rotational axis X-X in use. A radial direction 42 of the gas turbine engine 10 extends away from the principal rotational axis X-X and is mutually perpendicular to both the axial direction 41 and the angular direction 43. As will also be appreciated by those skilled in the art, each compressor 13, 14 and turbine 16, 17, 18 comprises one or more rotor and stator pairs, with each rotor having a plurality of blades (i.e., turbomachine blades). The axial direction 41, radial direction 42 and angular direction 43 are indicated on each of FIGs. 2 to 6.

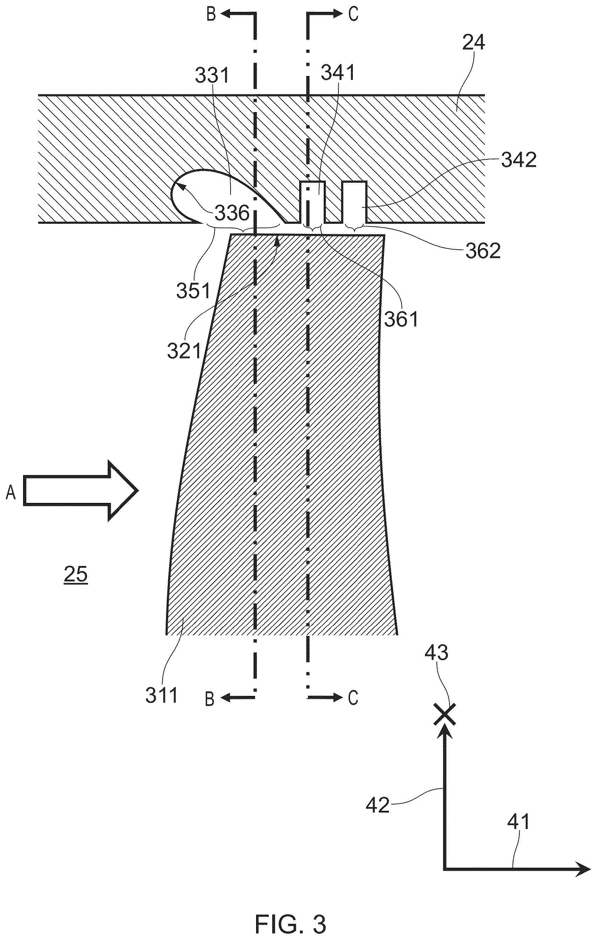

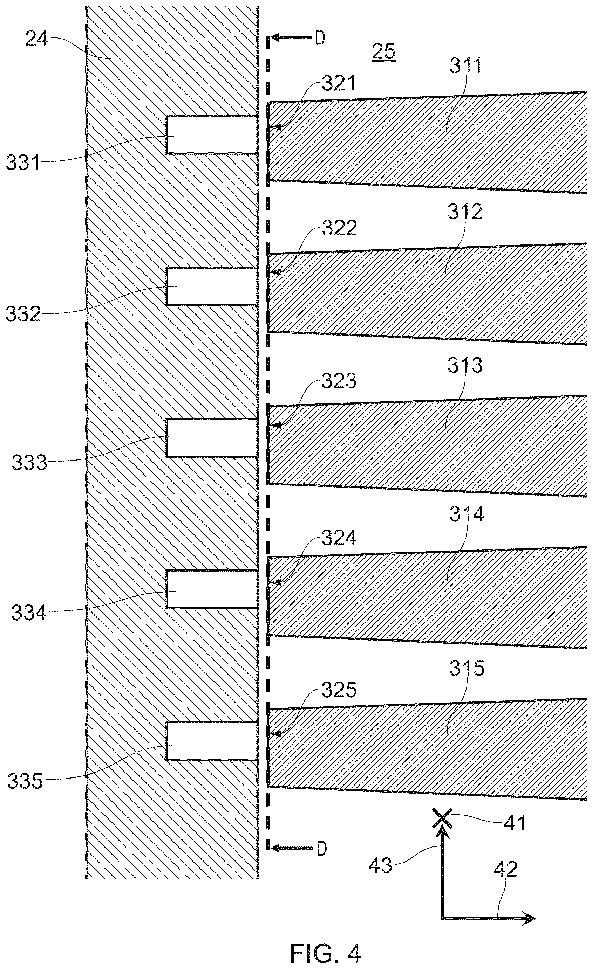

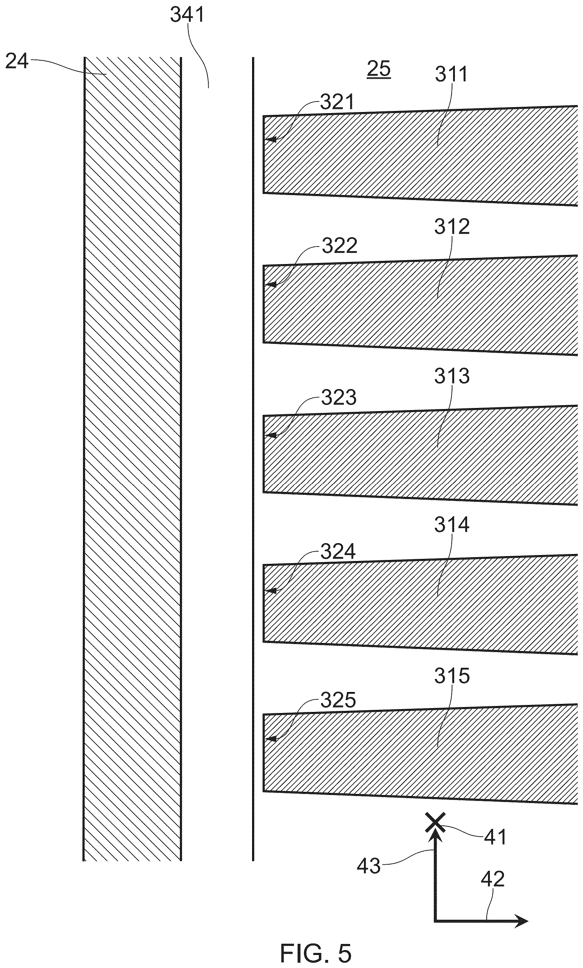

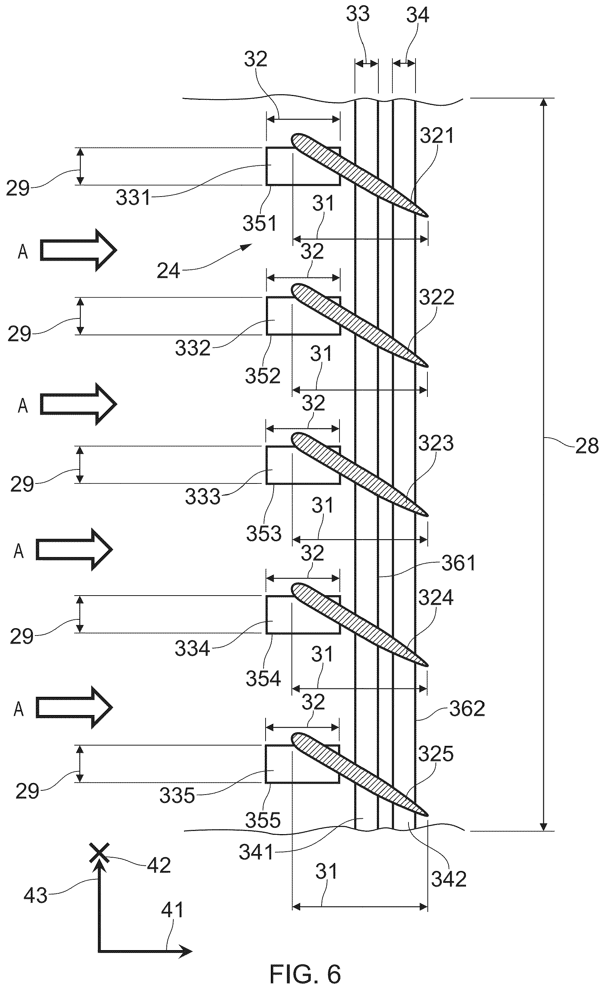

The following description is provided with particular reference to FIGs. 3 to 6. FIG. 3 is a sectional view of the example gas turbine engine of FIG. 2 as indicated by region A-A on FIG. 2. FIG. 4 is a tangential section view of the example gas turbine engine of FIG. 2 as indicated by section B-B on FIG. 3, which schematically shows the circumferential section in a linear format. FIG. 5 is a similar tangential section view of the example gas turbine engine of FIG. 2 as indicated by section C-C on FIG. 3. FIG. 6 is a radial section view of the example gas turbine engine of FIG. 2 as indicated by section D-D on FIG. 4.

FIG. 3 shows a single turbomachine blade 311 which forms part of a rotor of the low-pressure turbine 18 (e.g., a turbine stage) of the gas turbine engine 10 per region A-A on FIG. 2. FIGs. 4 to 6 shows a plurality of turbomachine blades 311, 312, 313, 314, 315, the single turbomachine blade 311 shown by FIG. 3 being one of the plurality of turbomachine blades 311-315. Each turbomachine blade is disposed within the casing structure 24 and includes a tip 321, 322, 323, 324, 325 which is in proximity (e.g., adjacent and/or opposing) to the casing structure 24. The turbomachine blades 311-315 each extend towards, and are mechanically coupled to, a central hub (not shown) so as to form a bladed disc of the low-pressure turbine 18. The central hub may, in turn, be mechanically coupled to or integral with the interconnecting shaft which links the low-pressure turbine 18 to one of the compressors 13, 14. In FIGs. 3 to 6, the turbomachine blades 311-315 are uniformly angularly offset (e.g., evenly/equally spaced apart along the angular direction 43) from one another. In gas turbine engines 10 according to the present disclosure, any non-zero number of turbomachine blades 311-315 may be disposed within the casing structure 24.

The casing structure 24 includes a plurality of axially extending slots 331, 332, 333, 334, 335 and a plurality of circumferentially extending grooves 341, 342.

The slots 331-335 are axially extending in that they are elongate along the axial direction 41 of the gas turbine engine 10 (e.g., a maximum dimension of each slot 331-335 measured parallel to the axial direction 41 is greater than a maximum dimension of the respective slot 331-335 measured parallel to the angular direction 43). As best shown by FIG. 6, an angular extent 29 of each slot 331-335 is relatively limited. Namely, the angular extent 29 of each slot may be no more than 36 degrees, no more than 18 degrees or no more than 9 degrees. In the example of FIGs. 3 to 6, a maximum dimension of each slot 331-335 is along the axial direction 41 of the gas turbine engine 10. In other examples, the maximum dimension of a slot may be along another direction.

The grooves 341, 342 are circumferentially extending in that they are elongate along the angular direction 43 of the gas turbine engine 10 (e.g., a maximum dimension of each groove 341, 342 measured parallel to the angular direction 43 is greater than a maximum dimension of the respective groove 341, 342 measured parallel to the axial direction 41). Accordingly, as also best shown by FIG. 6, an angular extent 28 of each groove 341, 342 is relatively extensive. The angular extent 28 of each groove 341, 342 may be at least 72 degrees (corresponding to 20 percent of the total angular extent of the gas turbine engine 10). The angular extent 28 of each groove 341, 342 may be at least 180 degrees (corresponding to 50 percent of the total angular extent of the gas turbine engine 10) or equal to 360 degrees (corresponding to 100 percent of the total angular extent of the gas turbine engine 10).

Further, as best shown by FIG. 6, each tip 321-325 has an axial extent 31 (i.e., a maximum dimension of the tip 321-325 along the axial direction 41 of the gas turbine engine 10). Similarly, a mouth 351, 352, 353, 354, 355 of each slot 331-335 has an axial extent 32 (i.e., a maximum dimension of the mouth 351-355 of the slot 331-335 along the axial direction 41 of the gas turbine engine 10). The axial extent 31 of each tip 321-325 partially overlaps with the axial extent 32 of the mouth 351-355 of each slot 331-335. Further, a mouth 361, 362 of each groove 341, 342 has a respective axial extent 33, 34 (i.e., a maximum dimension of the mouth 361, 362 of each groove 341, 342 along the axial direction 41 of the gas turbine engine 10). The axial extent 33, 34 of the mouth 361, 362 of each groove 341, 342 overlaps (e.g., is completely overlapped by) the axial extent 31 of the tip 321-325 of each turbomachine blade 311-315.

Each tip 321-325 has a finite angular extent. The angular extent of each tip 321-325 may be dependent on, among other things, the number of turbomachine blade(s) 311-315 forming the bladed disc, a chord length of the turbomachine blade(s) 311-315 and an angle of attack between the turbomachine blade(s) 311-315 and the first gas flow A. By way of example, the angular extent of the tip(s) 321-325 may be larger than the angular extent 29 of the slot(s) 331-335.

The slots 331-335 are angularly offset (e.g., spaced apart along the angular direction 43) from one another. The angular spacing between the slots 331-335 may be selected based on, for instance, the number of turbomachine blades forming the bladed disc. Aside from being angularly offset from one another, the slots 331-335 may be substantially identical with one another as shown by FIGs. 3 to 6. The grooves 341, 342 are axially offset (e.g., spaced apart along the axial direction 41) from the slots 331-335. The grooves 341, 342 are axially offset from one another. Aside from being axially offset from one another, the grooves 341, 342 may be substantially identical with one another as shown by FIGs. 3 to 6.

Each slot 331-335 is axially upstream of the grooves 341, 342 with respect to the first gas flow A passing through the gas turbine engine 10. As best shown by FIGs. 3 and 6, a portion of each slot is axially upstream of the tip 321-325 of each turbomachine blade 311-315. More specifically, and as best shown by FIG. 1, a portion of the mouth 351-355 of each slot 331-335 is axially upstream of the tip 321-325 of each turbomachine blade 311-315. As best shown by FIG. 3, each slot 331-335 is positioned over a fore chord portion of the adjacent turbomachine blade 311-315 and each groove 341, 342 is positioned over a mid chord portion and/or an aft chord portion of the adjacent turbomachine blade 311-315.

The axially extending slots 331-335 are each configured to promote recirculation of gas flow (i.e., the first gas flow A) therein along the axial direction 41 whereas the circumferentially extending grooves 341, 342 are each configured to promote circulation of gas flow (i.e., the first gas flow A) along the angular direction 43 and/or a tangential direction of the gas turbine engine 10.

In operation, the axially extending slots 331-335 recirculate the gas flow in a streamwise (e.g., axial) direction, energizing the gas near the casing structure 24 (e.g., in a boundary layer region) and delaying onset of a tip leakage vortex while the circumferentially extending grooves 341, 342 each circulate the gas flow in the angular direction 43/tangential direction thereby limiting a strength of the tip leakage vortex after it is formed. In this way, the slots 331-335 influence the flow physics over the fore chord section of the adjacent turbomachine blade 311-315 and the grooves 341, 342 influence the flow physics over the mid chord portion and the aft chord portion of the adjacent turbomachine blade 311-315. Gas turbine engines 10 in accordance with present disclosure therefore combine two different features for the respective purposes of axial gas flow redistribution and tangential gas flow redistribution.

The definition of recirculating the gas flow in the streamwise (e.g. axial) direction relates to the flow being caused to recirculate along a path which includes both upstream and downstream flow with respect to the general flow along the axial direction. Accordingly, the flow is not recirculated to only flow in an axial direction, but is recirculating within the slot. The flow may be substantially in a downstream axial direction at the mouth of the slots, and may follow an upstream direction within the slot, for example along the wall of the slot opposing the mouth.

When used in isolation, the circumferentially extending grooves 341, 342 provide a limited surge margin increase to the gas turbine engine 10 while incurring a relatively small efficiency penalty. Namely, the circumferentially extending grooves 341, 342 influence gas flow in a region proximal to the tip 321-325 of the turbomachine blade 311-315 by reducing an amount of relatively low momentum fluid therein, and thus reducing an effective "blockage" in the gas path through the gas turbine engine 10. The effective "blockage" proximal to a tip of a turbomachine blade may arise due to development of a tip leakage flow (TLF) which is driven from a relatively high pressure side/region of the turbomachine blade to a relatively low pressure side/region of the turbomachine blade. The TLF interacts with the surrounding/passing gas flow and results in a tip leakage vortex (TLV). The TLV can generate the effective "blockage". The circumferentially extending grooves 341, 342 reduce this effective "blockage" through a suction-injection effect on the relatively low momentum fluid within the casing structure 24. This reduces the TLF and thereby results in a relatively weakened TLV.

In contrast, when used in isolation, the slots 331-335 provide an enhanced surge margin increase to the gas turbine engine 10 but incur a relatively larger efficiency penalty. Specifically, the slots 331-335 reduce the effective "blockage" in the tip 321-325 of the turbomachine blade 311-315 by providing a path for the relatively low momentum fluid toward a leading edge (e.g., a leading edge with respect to the first gas flow A) of the turbomachine blade 311-315. This reduces the TLF and thereby results in a relatively weakened TLV.

The inventors have found that the described combination of at least one axially extending slot 331-335 and at least one circumferentially extending groove 341, 342 provides for an increased surge margin of the gas turbine engine 10 while limiting an efficiency penalty associated with the inclusion of such features within the casing structure 24. Without wishing to be bound by theory, it is considered that the axially extending slots 331-335 facilitate beneficial flow redistribution at a lower operating point/speed of the gas turbine engine 10 (e.g., at a part speed condition). Such flow distribution occurs from a relatively high pressure region in proximity to the tip 321-325 of the turbomachine blade 311-315 to a relatively low pressure region upstream of the leading edge of the turbomachine blade 311-315. At the same time, the circumferentially extending grooves 341, 342 minimise the efficiency penalty which would otherwise be incurred at a higher operating point/speed of the gas turbine engine 10 (e.g., at a full speed condition) by inhibiting development of a tip leakage vortex/vortices (e.g., by preventing development of a double tip leakage vortex). Accordingly, gas turbine engines 10 in accordance with the present invention may have a relatively extended working range and/or exhibit relatively increased operational robustness. Gas turbine engines 10 in accordance with the present invention also allow other dedicated flow control features/devices within or in proximity to the casing structure 24 to be omitted.

As shown by FIG. 3, a shape of an internal surface 336 of each slot 331-335 in a plane defined by the axial direction 41 and the radial direction 42 of the gas turbine engine 10 is curvilinear and concave. More specifically, a maximum axial extent of each slot 331-335 is radially offset (e.g., spaced along the radial direction 42) from the mouth 351-355 of the respective slot 331-335. As a result, the axial extent of the mouth 351-355 of each slot 331-335 is smaller than the maximum axial extent of the slot 331-335. As also shown by FIG. 1, a rearmost point (e.g., a trailing point with respect to the first gas flow A) of the internal surface 336 is located at the mouth 351-355 of each slot 331-335 and a foremost point (e.g., a leading point with respect to the first gas flow A) of the internal surface ISF is offset from the mouth 351-355 of the slot 331-335 along the radial direction 42. Accordingly, the shape of each slot 331-335 in a plane defined by the axial direction 41 and the radial direction 42 may be described as a half-heart, with the mouth 351-355 of each slot being the line of symmetry about which the half-heart shape may be reflected to result in a fullheart shape (i.e., a cardioid). The half-heart shape may be defined by B-splines and/or Bézier curves, for instance.

Other shapes for the or each slot 331-335 in the plane defined by the axial direction 41 and the radial direction 42 are possible. For example, the or each slot 331-335 may have a Seitz shape, a CIAM shape or another shape in the plane defined by the axial direction 41 and the radial direction 42.

As shown by FIG. 4, a shape of an internal surface of each slot 331-335 in a plane defined by the radial direction 42 and the angular direction 43 of the gas turbine engine 10 may be substantially rectangular. Additionally, as shown by FIG. 6, a shape of a perimeter of the mouth 351-355 of each slot 331-335 in a plane defined by the axial direction 41 and the angular direction 43 of the gas turbine engine 10 may be substantially rectangular. However, other suitable shapes for the slots 331-335 in the planes defined by the radial direction 42 and the angular direction 43 and defined by the axial direction 41 and the angular direction 43, respectively, may be employed.

As shown by FIG. 3, a shape of an internal surface of each groove 341, 342 in the plane defined by the axial direction 41 and the radial direction 42 of the gas turbine engine 10 may be substantially rectangular. Further, as shown by FIG. 5, a shape of an internal surface of the groove(s) 341, 342 in the plane defined by the radial direction 42 and the angular direction 43 of the gas turbine engine 10 may be substantially rectangular. Yet further, as by FIG. 6, a shape of a perimeter of the mouth 361-362 of each groove 341, 342 in the plane defined by the axial direction 41 and the angular direction 43 of the gas turbine engine 10 may be a continuous hoop having linear edges. Nevertheless, other suitable shapes for the groove 341, 342 in the planes defined by the axial direction 41 and the radial direction 42, defined by the radial direction 42 and the angular direction 43 and defined by the axial direction 41 and the angular direction 43, respectively, may be employed.

Although the preceding description has been provided with reference to FIGs. 3 to 6 in the context of a turbine stage of a gas turbine engine, it will be appreciated that the principles described herein are applicable to other elements of a gas turbine engine and/or a fluid flow machine, such as in a compressor stage or a fan thereof.

In the examples shown by FIGs. 3 to 6, the geometrical form (e.g., the shape) of each slot 331-335 is substantially identical. However, this need not necessarily be the case. Likewise, in the examples shown by FIGs. 3 to 6, the geometrical form (e.g., the shape) of each groove 341, 342 is substantially identical. However, this also need not necessarily be the case.

### Other

Various examples have been described, each of which comprise one or more combinations of features. It will be appreciated by those skilled in the art that, except where clearly mutually exclusive, any of the features may be employed separately or in combination with any other features and the invention extends to and includes all combinations and sub-combinations of one or more features described herein. The present disclosure is also relevant for land, aviation and marine applications in both civil and military contexts.

## Claims

1. A fluid flow machine comprising a casing structure extending around an axial direction of the fluid flow machine, and a turbomachine blade disposed within the casing structure, wherein:
the casing structure includes an axially extending slot having an axial extent at least partially overlapping with an axial extent of a tip of the turbomachine blade, wherein the slot has an angular extent of no more than 36 degrees; and
the casing structure includes a circumferentially extending groove having an angular extent of at least 72 degrees; and
the groove is axially offset from the slot.

2. The fluid flow machine of claim 1, wherein the slot is configured to promote recirculation of gas flow therein along the axial direction.

3. The fluid flow machine of claim 1 or claim 2, wherein the groove is configured to promote circulation of gas flow along an angular direction of the fluid flow machine.

4. The fluid flow machine of any preceding claim, wherein the slot is axially upstream of the groove.

5. The fluid flow machine of any preceding claim, wherein the angular extent of the groove is at least 180 degrees.

6. The fluid flow machine of claim 5, wherein the angular extent of the groove is equal to 360 degrees.

7. The fluid flow machine of any preceding claim, wherein the groove has an axial extent at least partially overlapping with the axial extent of the tip of the turbomachine blade.

8. The fluid flow machine of any preceding claim, wherein at least a portion of the slot is axially upstream of the tip of the turbomachine blade.

9. The fluid flow machine of any preceding claim, wherein the axial extent of the groove is completely overlapped by the axial extent of the tip of the turbomachine blade.

10. The fluid flow machine of any preceding claim, wherein a shape of an internal surface of the slot in a plane defined by the axial direction and a radial direction of the fluid flow machine is curvilinear and concave.

11. The fluid flow machine of claim 10, wherein a radial location of a maximum axial extent of the slot is radially offset from a mouth of the slot.

12. The fluid flow machine of any preceding claim, wherein the casing structure comprises a plurality of circumferentially extending grooves, wherein each groove has an axial extent at least partially overlapping with the axial extent of the tip of the turbomachine blade, and wherein each of the grooves are axially offset from one another.

13. The fluid flow machine of any preceding claim, wherein the casing structure comprises a plurality of axially extending slots, wherein each slot has an axial extent at least partially overlapping with the axial extent of the tip of the turbomachine blade, and wherein the slots are angularly offset from one another.

14. The fluid flow machine of any preceding claim, wherein the turbomachine blade is part of a compressor stage, a turbine stage or a fan of the fluid flow machine.

15. An aircraft comprising the fluid flow machine of any preceding claim.
